# EUROPEAN PATENT SPECIFICATION

(11) **EP 2 574 239 B1**
(45) Date of publication and mention of the grant of the patent: **16.09.2015**
(21) Application number: 11183301.8
(22) Date of filing: 29.09.2011
(51) Int. Cl.: A23C 11/10, A23L 1/20, A23L 1/302

(54) **Soymilk with vitamin C additive**
Sojamilch mit Zusatz von Vitamin C
Lait de soja avec un additif de la vitamine C

(43) Date of publication of application: 03.04.2013
(73) Proprietor: Sunway Biotech Co., Ltd., Taipei City 11494 (TW)
(72) Inventor: Tzu-Ming, Pan, 11494 Taipei City (TW); Cheng-Lun, Wu, 11494 Taipei City (TW)
(74) Representative: Becker Kurig Straus

(56) References cited:
- JP-A- 55 099 170
- DATABASE GNPD [Online] Mintel; 1 April 2010 (2010-04-01), Anonymous: "Strawberry Flavored Soy Drink Mix", XP002670287, retrieved from www.gnpd.com Database accession no. 1302280
- DATABASE GNPD [Online] Mintel; 1 January 2007 (2007-01-01), Anonymous: "Banana Flavored Powdered Soy Milk", XP002670288, retrieved from www.gnpd.com Database accession no. 638223
- DATABASE GNPD [Online] Mintel; 1 February 2005 (2005-02-01), Anonymous: "Organic Soymilk", XP002670289, retrieved from www.gnpd.com Database accession no. 10206890
- DATABASE GNPD [Online] Mintel; 1 June 2011 (2011-06-01), Anonymous: "Black Soy Milk", XP002670290, retrieved from www.gnpd.com Database accession no. 1598497
- DATABASE GNPD [Online] Mintel; 1 May 2009 (2009-05-01), Anonymous: "Soy based drink mix for women", XP002670291, retrieved from www.gnpd.com Database accession no. 1092706
- DATABASE GNPD [Online] Mintel; 1 March 1999 (1999-03-01), Anonymous: "Natural Energy Drink", XP002670292, retrieved from www.gnpd.com Database accession no. 10059006
- DATABASE GNPD [Online] Mintel; 1 May 2000 (2000-05-01), Anonymous: "Veggie Milk Tetra Paks", XP002670293, retrieved from www.gnpd.com Database accession no. 10067132
- DATABASE GNPD [Online] Mintel; 1 February 2009 (2009-02-01), Anonymous: "Soy Coffee with Milk", XP002670294, retrieved from www.gnpd.com Database accession no. 1034832
- D. P. DERMAN ET AL: "Factors influencing the absorption of iron from soya-bean protein products", BRITISH JOURNAL OF NUTRITION, vol. 57, no. 03, 1 May 1987 (1987-05-01), page 345, XP55020250, ISSN: 0007-1145, DOI: 10.1079/BJN19870042
- M Giiooly ET AL: "The relative effect of ascorbic acid on iron absorption from soy-based and milk-based infant formulas", The American Journal of Clinical Nutrition, 17 April 1984 (1984-04-17), pages 522-527, XP55019825, Retrieved from the Internet: URL:http://www.ajcn.org/content/40/3/522.f ull.pdf#page=1&view=FitH [retrieved on 2012-02-20]
- LYNCH S R ET AL: "Iron and ascorbic acid: proposed fortification levels and recommended iron compounds", THE JOURNAL OF NUTRITION, WISTAR INSTITUTE OF ANATOMY AND BIOLOGY, 1 January 2003 (2003-01-01), pages 2978S-2984S, XP002532660, ISSN: 0022-3166
- DAVIDSSON LENA; WALCZYK THOMAS; MORRIS AUDREY; HURRELL RICHARD F: "Influence of ascorbic acid on iron absorption from an iron-fortified, chocolate-flavored milk drink in Jamaican children", AMERICAN JOURNAL OF CLINICAL NUTRITION, vol. 67, 1 May 1998 (1998-05-01), pages 873-877, XP002670295,
- LEIF HALLBERG ET AL: "Is There a Physiological Role of Vitamin C in Iron Absorption?", ANNALS OF THE NEW YORK ACADEMY OF SCIENCES, vol. 498, no. 1 Third Confere, 1 July 1987 (1987-07-01), pages 324-332, XP55019840, ISSN: 0077-8923, DOI: 10.1111/j.1749-6632.1987.tb23771.x

## Description

### BACKGROUND OF THE INVENTION

### 1. Technical Field

The present invention relates to a soymilk, and more particularly, to a drink made by using soybean or black bean as raw material, Vitamin C salts or Vitamin C stereoisomer, which is helpful to increase the iron absorptivity in small intestine.

### 2. Description of Related Art

According to reports proposed by the Food and Agriculture Organization (FAO) of the United Nations and the World Health Organization (WHO), iron deficiency is a noticeable issue of nutritional deficit. The iron deficiency issue is not merely spread in those backward and developing countries, but it does not be completely solved in advanced America and Europe areas. Iron deficiency is a progressive and successive changing process. Iron deficiency shows the exhaustion of the iron stored in human body at the early stage, such that iron in blood intends to shortage and cannot meet the demand of the hematopoietic tissue. Eventually, anemia is occurred and resulted from heme synthetase, thus, it is able to know that the anemia is the symptom of the iron deficiency at the last stage thereof.

For iron deficiency issue is spread, the nutritional fortification of flour is conducted in America since 1943, and the nutrients added in to the flour include Vitamin B1, Vitamin B2, Vitamin B3, and Iron. However, according to the investigation reported by the Third National Health and Nutrition Examination Survey (NHANES III), the women in children bearing ages show the highest prevalence of iron deficiency ranging from 9% to 11%, next high prevalence of iron deficiency is 9% shown by the children who are 1-2 years old, and the men show the prevalence of iron deficiency lower than 2%.

According to the human body and animal experiments, it can know that the iron deficiency impacts two immune functions of human body, which are (1) reducing the phagocytosis of the neutrophils and (2) reducing the reaction of T-lymphocyte for the cell proliferation dose or the antigen. In addition, the activity of protein DMT1 would increase when the body is in iron deficiency situation; however, the absorptivity of the protein DMT1 for some bivalent metallic elements, such as lead and chromium, will be increased because the protein DMT1 lacks specificity.

Moreover, researches find that the primary impact factors of iron absorption include the bioavailability and the chemical forms of iron. The chemical forms of iron can be divided into "heme iron" and "non-heme iron". Heme iron is mainly obtained from meat and the average absorption rate thereof is 25%. Oppositely, non-heme iron is obtained from various plant foods, such as ferritin and supplements-iron, wherein the average absorption rate of non-heme iron is 7.5%. Besides, the absorption rate of non-heme iron may be affected by food composition; therefore, iron bioavailability represents that the iron in the food capable of being normally digested and absorbed in human body, which is a combination result of several physiological processes, wherein the physiological processes consist the steps of: (1) digesting; (2) iron being in taken by intestinal cell and transported by blood; and (3) forming function-based protein to perform the physiological function thereof. In addition, researches and experiments also find that vitamin C and muscle proteins coming from poultry, livestock, fish, or shellfish may encourage the absorption rate of iron. Furthermore, researches and experiments find that vitamin C content is directly proportional to the absorption rate of iron if the vitamin C content is ranged in 25∼100 mg, however, there is no further change in the absorption rate of iron when the vitamin C content is greater than 100 mg. There many papers about the impact factors of iron absorption are published, for example, D. P. DERMAN et al published the paper with title of "Factors influencing the absorption of iron from soya-bean protein products" in British Journal of Nutrition, vol. 57, no. 03, 1 May 1987; M Giiooly et al published the paper with title of "The relative effect of ascorbic acid on iron absorption from soy-based and milk-based infant formulas" in American Journal of Clinical, pages 522-527, 17 April 1984; and Lynch S R et al published the paper with title of "Iron and ascorbic acid: proposed fortification levels and recommended iron compounds" in Journal of Nutrition, Wistar Institute of Anatomy and Biology, pages 2978S-2984S, 1 January 2003.

Soymilk is a common drink in human life, which is made by using soybean (or black bean) as the raw material. The Japan patent of JP55-099170 taught a soybean processing method for making said soybean milk with no soybean odor, astringency and throat irritation. The method steps is in follows: unprocessed or skin-removed soybeans are immersed in water which contains 0.1-1.0%, based on the weight of the soybeans, of gluconic delta- lactone, 0.1-1.0% of ascorbic acid or its sodium salt and sodium bicarbonate in such an amount that the pH of the water becomes 6.5-7.5 at the completion of the immersion, at a temperature of lower than 10 °C, preferably lower than 7 °C for 16- 24hr. Then, the water is removed and the soybeans are simply washed with water and the resulting soybeans are ground in hot water so that the temperature becomes 80 °C or higher on the completion of grinding and then filtered.

Soymilk is rich in nutritional value and medicinal function, for instance, protein, calcium, phosphorus, iron, zinc, vitamin A, vitamin B, etc. So that, in view of the soymilk is rich in nutritional value and medicinal function, scholars believe that diabetes, hypertension, cancer, bronchitis, Alzheimer's dementia, and constipation may be prevented if people properly drink the soymilk, so as to help people to stay fit and healthy. According to the web of www.gnpd.com, it is able to know that the commercial soy milk drinks are rich in nutritional value and medicinal function, for example, the strawberry flavored soy drink mix of serial number XP002670287, the banana flavored soymilk of serial number XP002670288, the organic soymilk of serial number XP002670289, the black soy milk of serial number XP002670290, the soy based drink mix for women of serial number XP002670291, the natural energy drink of serial number XP002670292, the veggie milk tetra paks of serial number XP002670293, and the soy coffee with milk of serial number XP002670294, which all include the nutrients, such as vitamin C. However, although soymilk is rich in nutritional value and medicinal function, the soymilk contains large amounts of oxalic acid and phytic acid. The oxalic acid and the phytic acid may easily become ferrous chelates and form the ferrous oxalate and the ferrous phytate for precipitation, such that the absorption rate of iron will be decreased. Therefore, the anemia resulted from iron deficiency may occurs on the soymilk long-term drinkers.

Accordingly, in view of the soymilk being rich in nutritional value and medicinal function, the inventor of the present invention desired to research and develop a kind of soymilk, which will not impact the absorption rate of iron in human body. Hence, the inventor of the present application has made great efforts to make inventive research thereon and eventually provided a soymilk with additive of ascorbic acid, vitamin C salts or vitamin C stereoisomer.

### BRIEF SUMMARY OF THE INVENTION

The first objective of the present invention is to provide a soymilk with vitamin C additive, wherein when people drink the soymilk with vitamin C additive, the inhibition of iron bioavailability may be reduced because the effect of the ascorbate ion dissociated from the ascorbic acid, and furthermore, the iron absorptivity in small intestine can be increased.

Accordingly, to achieve the first objective of the present invention there is provided a soymilk according to claim 1.

### BRIEF DESCRIPTION OF THE SEVERAL VIEWS OF THE DRAWINGS

The invention as well as a preferred mode of use and advantages thereof will be best understood by referring to the following detailed description of an illustrative embodiment in conjunction with the accompanying drawings, wherein:
FIG. 1 is a curve plot of the concentration of the dialysable iron in a soymilk with different iron dosage;
FIG. 2 is a curve plot of the concentration of the releasable iron in a ferrous sulfate soymilk with different ascorbate additives;
FIG. 3 is a curve plot of the average concentration of the releasable iron in the ferrous sulfate soymilk with different ascorbate additives providing the same ascorbate ion concentration;
FIG. 4 is a curve plot of the concentration of the releasable iron in a ferrous bisglycinate soymilk with different ascorbate additives;
FIG. 5 is a curve plot of the average concentration of the releasable iron in the ferrous bisglycinate soymilk with different ascorbate additives providing the same ascorbate ion concentration;
FIG. 6 is a curve plot of the concentration of the releasable iron in a ferric pyrophosphate soymilk with different ascorbate additives;
FIG. 7 is a curve plot of the average concentration of the releasable iron in the ferric pyrophosphate soymilk with different ascorbate additives providing the same ascorbate ion concentration;
FIG. 8 is a curve plot of the concentration of the releasable iron in a ferrous gluconate soymilk with different ascorbate additives;
FIG. 9 is a curve plot of the average concentration of the releasable iron in the ferrous gluconate soymilk with different ascorbate additives providing the same ascorbate ion concentration; and
FIG. 10 is a curve plot of the concentration of the releasable iron in the ferrous gluconate soymilk with a sodium isoascorbate additive.

### DETAILED DESCRIPTION OF THE INVENTION

To more clearly describe a soymilk with additive of ascorbic acid, vitamin C salts or vitamin C stereoisomer according to the present invention, embodiments of the present invention will be described in detail with reference to the attached drawings hereinafter.

Soymilk is a common drink in human life; so that it is commonly known that people will often drink soymilk. Although soymilk is rich in nutritional value and medicinal function, the soymilk contains large amounts of oxalic acid and phytic acid. The oxalic acid and the phytic acid may easily become ferrous chelates and form the ferrous oxalate and the ferrous phytate for precipitation, such that the absorption rate of iron will be decreased. Therefore, the anemia resulted from iron deficiency may occurs on the soymilk long-term drinkers. In addition, researches also find that vitamin C content is directly proportional to the absorption rate because vitamin C may inhibit the combination of substances and the iron, such that iron ions can easily be released and become water-soluble forms, so as to be absorbed by human body. (Please refer to the papers: (1) Hallberg L, Brune M, Rossander-Hulthén L (1987). Is there a physiological role of vitamin C in iron absorption? Ann N Y Acad Sci., 498:324-32; and (2) Hunt JR, Mullen LM, Lykken GI, Gallagher SK, Nielsen FH (1990). Ascorbic acid: effect on ongoing iron absorption and status in iron-depleted young women. Am J Clin Nutr. Apr;51(4):649-55)). It must note that vitamin C commonly consists in the forms of: ascorbic acid, calcium ascorbate, sodium ascorbate, zinc ascorbate, potassium ascorbate. Moreover, there also exists synthetic stereoisomer of vitamin C, such as isoascorbic acid, calcium isoascorbate, sodium isoascorbate, zinc isoascorbate, and potassium isoascorbate.

Accordingly, in order to eliminate the misgivings of suffering from the iron deficiency anemia of the soymilk long-term drinkers and make them able to continuously keep the habit of drinking soymilk; thus, the present invention in one aspect provides a soymilk with ascorbic acid additive manufactured by way of adding an ascorbic acid into a drink made by using at least one kind of bean as the raw material, and the soymilk with ascorbic acid additive is helpful to increase the iron absorptivity in small intestine, wherein the additive dosage of the ascorbic acid is ranged from 25 mg/100ml to 50 mg/100ml. Herein, because the ascorbic acid can be obtained from native foods or made by way of chemical synthesis, the ascorbic acid added into the drink made by using the bean as the raw material is not limited to native ascorbic acid or synthetic ascorbic acid. Besides, because both soybean and black bean can be fabricated to the soymilk, the bean as the raw material of the soymilk is not limited to the soybean or the black bean.

Moreover, according to others forms of vitamin C, in the present invention, it also provides according to another aspect a soymilk with additive of vitamin C salts manufactured by way of adding an ascorbate into a drink made by using at least one kind of bean as the raw material. Similarly, the soymilk with vitamin C salt additive is helpful to increase the iron absorptivity in small intestine, wherein the equivalent dosage of the ascorbate ion provided by the ascorbate is ranged from 25 mg/100ml to 50 mg/100ml. In the soymilk with additive of vitamin C salts, the ascorbate added into the soymilk may be calcium ascorbate, sodium ascorbate, zinc ascorbate, or potassium ascorbate. Of course, for the soymilk with additive of vitamin C salts, the ascorbate is not limited to native ascorbate or synthetic ascorbate.

In addition, according to others forms of vitamin C, in the present invention, it further provides according to yet another aspect a soymilk with additive of vitamin C stereoisomer manufactured by way of adding an ascorbic acid stereoisomer into a drink made by using at least one kind of bean as the raw material. Similarly, the soymilk with vitamin C stereoisomer additive is helpful to increase the iron absorptivity in small intestine, wherein the equivalent dosage of the ascorbate ion provided by the ascorbic acid stereoisomer is ranged from 25 mg/100ml to 50 mg/100ml. In the soymilk with additive of vitamin C stereoisomer, the ascorbic acid stereoisomer added into the soymilk may be isoascorbic acid, calcium isoascorbate, sodium isoascorbate, zinc isoascorbate, and potassium isoascorbate.

Through above descriptions, all embodiments of the soymilk with additive of vitamin C, vitamin C salts or vitamin C stereoisomer of the present invention have been introduced and described. Next, for proving that the iron bioavailability can be increased after people drink the soymilk with additive of vitamin C, vitamin C salts or vitamin C stereoisomer, multi experiments and the data thereof are made and reported. In which, "in vitro digestion and dialysis" is used in the experiments for determining the releasable iron in human body after the foods are digested.

Firstly, iron(II) sulfate heptahydrate is used as a standard in the experiment, and the in vitro digestion and dialysis of the iron(II) sulfate heptahydrate is done. Therefore, experiment result shows only 50.39% iron ions can be released after the aqueous solution of ferrous sulfate with 100 ppm iron ions has been processed by gastric and intestinal fluid, and it implies that human body cannot absorb all the iron ions because 49.61 % iron ions are naturally inhibited by human body.

In addition, according to the database of United States Department of Agriculture (USDA), it is able to know that soymilk contains 4 ppm iron, however, there have no iron ions be determined after the in vitro digestion and dialysis of the soymilk is completed. It implies that the release of iron ions are not only inhibited by human body but also inhibited by the composition of the soymilk, so that the iron in the soymilk cannot be completely released in human body.

For improving that, a first experiment in the present invention is done, that is, to respectively add the ascorbic acid and the calcium ascorbate into the soymilk and determine the concentration of the releasable iron thereof. Please refer to following Table (1), which is a statistical table of the releasable iron concentration in the soymilk.

**Table (1)**

| Additive | equivalent additive dosage (mg/100mL) | releasable iron (ppm) | iron release rate (%) | Relative Release rate (%) |
|---|---|---|---|---|
| none | 0 | 0 | 0 | 0 |
| ascorbic acid | 75 | 2.07 | 51.75 | 102.7 |
| ascorbic acid | 175 | 3.15 | 78.75 | 156.28 |
| calcium ascorbate | 175 | 1.95 | 48.75 | 96.75 |

| | | | | |
|---|---|---|---|---|
| * relative release rate = (iron release rate)/ (iron release rate of the ferrous sulfate aqueous solution) | | | | |

In Table (1), it is obvious that the inhibition of soymilk on iron release is reduced when the ascorbic acid and the calcium ascorbate are respectively added into the soymilk, so that the iron ions in the soymilk are able to be released into the digestive fluid. Moreover, if it adds more additive dosage of ascorbic acid into the soymilk, the iron naturally inhibited by gastric and intestinal fluid can also be released. Therefore, experiment result has been proved that the ascorbic acid and the calcium ascorbate may encourage the release of the iron in the soymilk.

For more proving that the iron release rate can be increased when the ascorbic acid, the ascorbate, or ascorbate stereoisomer is added into the soymilk, a second experiment is done, that is, to respectively add ferrous sulfate, ferrous bisglycinate, ferric pyrophosphate, and ferrous gluconate into the soymilk and determine the concentration of the releasable iron thereof. Thus, in the second experiment, the ferrous sulfate, the ferrous bisglycinate, the ferric pyrophosphate, and the ferrous gluconate are respectively added into soymilk by different concentration gradients, and a point showing that the releasable iron concentration starts to rise with the incensement of the additive dosage is taken as a datum point; besides, the releasable iron concentration is taken as an initially inhibiting concentration. The results of the second experiment are shown in following Table (2), which is a statistical table of the releasable iron concentration in the soymilk with different additives.

**Table (2)**

| additive dosage of iron (ppm) | concentration of releasable iron (ppm) | | | |
|---|---|---|---|---|
| | ferrous sulfate | ferrous bisglycinate | ferric pyrophosphate | ferrous gluconate |
| 10 | 1.56 | 1.59 | - | 1.61 |
| 20 | **1.76** | **1.90** | - | 2.05 |
| 30 | 2.47 | 2.73 | 1.09 | **2.08** |
| 40 | 2.62 | 3.30 | - | 2.68 |
| 50 | 2.75 | 3.93 | **1.22** | 3.15 |
| 60 | 3.27 | - | - | 4.06 |
| 70 | 3.72 | - | - | 3.98 |
| 75 | - | - | 1.66 | 3.87 |

| | | | | |
|---|---|---|---|---|
| * Boldface numbers represent the releasable iron concentration at the initially inhibiting concentration | | | | |

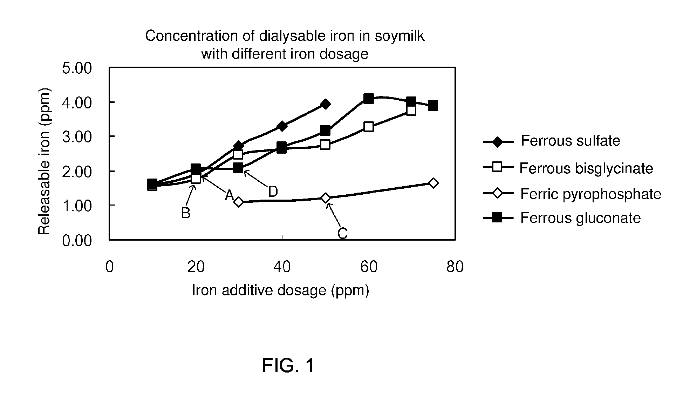

Please refer to FIG. 1, which illustrates a curve plot of the concentration of the dialysable iron in a soymilk with different iron dosage. As shown in FIG. 1 and Table (2), the initially inhibiting concentrations for the ferrous sulfate, the ferrous bisglycinate, the ferric pyrophosphate, and the ferrous gluconate are 20 ppm, 20 ppm, 50 ppm, and 30 ppm, respectively. Next, in the second experiment, it respectively adds different additive dosage of vitamin C, sodium vitamin C, potassium vitamin C, and calcium vitamin C into the soymilk with 20 ppm ferrous sulfate for testing the effect of encouraging the release of iron ions. Wherein the vitamin C, sodium vitamin C, potassium vitamin C, and calcium vitamin C are abbreviated as VC, NaVC, KVC, and CaVC, and the experiment results are listed in following Table (3), Table (4), Table (5), Table (6), and Table (7), respectively.

**Table (3)**

| additive dosage of VC (ppm) | releasable iron concentration (ppm) | iron release rate (%) | relative release rate (%) |
|---|---|---|---|
| 0 | 1.90 | 9.52 | 18.88 |
| 25 | 3.22 | 16.10 | 31.95 |
| 50 | 5.02 | 25.10 | 49.81 |
| 75 | 5.86 | 29.30 | 58.15 |
| 100 | 6.80 | 34.01 | 67.50 |
| 125 | 7.18 | 35.90 | 71.24 |
| 150 | 7.66 | 38.30 | 76.01 |
| 175 | 7.96 | 39.80 | 78.98 |
| 200 | 8.25 | 41.23 | 81.83 |
| 225 | 8.35 | 41.75 | 82.85 |
| 250 | 8.66 | 43.30 | 85.93 |
| 275 | 8.78 | 43.90 | 87.12 |
| 300 | 9.05 | 45.25 | 89.80 |
| 325 | 9.31 | 46.55 | 92.38 |
| 350 | 9.82 | 49.10 | 97.44 |
| 375 | 9.89 | 49.45 | 98.13 |
| 400 | 10.19 | 50.97 | 101.14 |
| 425 | 10.60 | 53.00 | 105.18 |
| 450 | 11.31 | 56.55 | 112.22 |
| 475 | 11.54 | 57.70 | 114.51 |
| 500 | 11.98 | 59.89 | 118.85 |

| | | | |
|---|---|---|---|
| *Table (3) is a statistical table of the releasable iron concentration in the soymilk with 20 ppm ferrous sulfate and VC additive. | | | |

**Table (4)**

| additive dosage of NaVC (ppm) | releasable iron concentration (ppm) | iron release rate (%) | relative release rate (%) |
|---|---|---|---|
| 0.0 | 1.90 | 9.52 | 18.88 |
| 28.6 | 3.08 | 15.40 | 30.56 |
| 57.1 | 4.98 | 24.90 | 49.41 |
| 85.7 | 6.73 | 33.65 | 66.78 |
| 114.3 | 7.97 | 39.85 | 79.09 |
| 142.9 | 8.02 | 40.10 | 79.58 |
| 171.4 | 8.33 | 41.65 | 82.66 |
| 200.0 | 8.75 | 43.75 | 86.82 |
| 228.6 | 9.40 | 46.99 | 93.26 |
| 257.1 | 9.55 | 47.75 | 94.76 |
| 285.7 | 9.89 | 49.45 | 98.13 |
| 314.3 | 10.03 | 50.15 | 99.52 |
| 342.9 | 10.32 | 51.60 | 102.40 |
| 371.4 | 10.36 | 51.80 | 102.80 |
| 400.0 | 10.51 | 52.55 | 104.29 |
| 428.6 | 10.62 | 53.10 | 105.38 |
| 457.1 | 10.45 | 52.25 | 103.69 |
| 485.7 | 10.79 | 53.95 | 107.06 |
| 514.3 | 10.99 | 54.94 | 109.03 |
| 542.9 | 11.37 | 56.85 | 112.82 |
| 571.4 | 11.73 | 58.67 | 116.44 |

| | | | |
|---|---|---|---|
| *Table (4) is a statistical table of the releasable iron concentration in the soymilk with 20 ppm ferrous sulfate and NaVC additive. * wherein content of ascorbic acid ions in the soymilk dissociated from the NaVC is 87.5% | | | |

**Table (5)**

| additive dosage of KVC (ppm) | releasable iron concentration (ppm) | iron release rate (%) | relative release rate (%) |
|---|---|---|---|
| 0.0 | 1.90 | 9.52 | 18.88 |
| 30.4 | 4.22 | 21.10 | 41.87 |
| 60.8 | 5.34 | 26.70 | 52.99 |
| 91.2 | 6.36 | 31.80 | 63.11 |
| 121.6 | 8.13 | 40.63 | 80.62 |
| 152.0 | 8.30 | 41.50 | 82.36 |
| 182.4 | 8.69 | 43.45 | 86.23 |
| 212.8 | 8.77 | 43.85 | 87.02 |
| 243.2 | 8.90 | 44.50 | 88.31 |
| 273.6 | 9.11 | 45.55 | 90.39 |
| 304.0 | 9.34 | 46.70 | 92.68 |
| 334.4 | 9.39 | 46.95 | 93.17 |
| 364.8 | 9.61 | 48.05 | 95.36 |
| 395.2 | 10.38 | 51.90 | 103.00 |
| 425.6 | 10.61 | 53.05 | 105.28 |
| 456.0 | 10.74 | 53.70 | 106.57 |
| 486.4 | 10.79 | 53.95 | 107.06 |
| 516.8 | 10.92 | 54.60 | 108.35 |
| 547.2 | 11.15 | 55.75 | 110.63 |
| 577.6 | 11.64 | 58.20 | 115.50 |
| 608.0 | 11.77 | 58.85 | 116.79 |

| | | | |
|---|---|---|---|
| *Table (5) is a statistical table of the releasable iron concentration in the soymilk with 20 ppm ferrous sulfate and KVC additive. * wherein content of ascorbic acid ions in the soymilk dissociated from the KVC is 82.2% | | | |

**Table (6)**

| additive dosage of CaVC (ppm) | releasable iron (ppm) | iron release rate (%) | relative release rate (%) |
|---|---|---|---|
| 0.0 | 1.90 | 9.52 | 18.88 |
| 27.9 | 3.62 | 18.10 | 35.92 |
| 55.7 | 5.62 | 28.10 | 55.77 |
| 83.6 | 6.3 | 31.50 | 62.51 |
| 111.4 | 7.24 | 36.22 | 71.87 |
| 139.3 | 7.42 | 37.10 | 73.63 |
| 167.1 | 7.89 | 39.45 | 78.29 |
| 195.0 | 8.11 | 40.55 | 80.47 |
| 222.8 | 8.23 | 41.17 | 81.71 |
| 250.7 | 8.39 | 41.95 | 83.25 |
| 278.5 | 8.65 | 43.27 | 85.87 |
| 306.4 | 9.02 | 45.10 | 89.50 |
| 334.2 | 9.31 | 46.55 | 92.38 |
| 362.1 | 9.75 | 48.75 | 96.75 |
| 389.9 | 10.22 | 51.10 | 101.41 |
| 417.8 | 10.83 | 54.15 | 107.46 |
| 445.6 | 11.10 | 55.50 | 110.14 |
| 473.5 | 11.32 | 56.60 | 112.32 |
| 501.3 | 11.92 | 59.60 | 118.28 |
| 529.2 | 12.00 | 60.00 | 119.07 |
| 557.0 | 12.43 | 62.15 | 123.34 |

| | | | |
|---|---|---|---|
| *Table (6) is a statistical table of the releasable iron concentration in the soymilk with 20 ppm ferrous sulfate and CaVC additive. * wherein content of ascorbic acid ions in the soymilk dissociated from the CaVC is 89.8% | | | |

**Table (7)**

| average additive dosage of ascorbic acid ions (ppm) | releasable iron concentration (ppm) | iron release rate (%) | relative release rate (%) |
|---|---|---|---|
| 0 | 1.90 | 9.52 | 18.88 |
| 25 | 3.54 | 17.68 | 35.08 |
| 50 | 5.24 | 26.20 | 51.99 |
| 75 | 6.31 | 31.56 | 62.64 |
| 100 | 7.54 | 37.68 | 74.77 |
| 125 | 7.73 | 38.65 | 76.70 |
| 150 | 8.14 | 40.71 | 80.79 |
| 175 | 8.40 | 41.99 | 83.33 |
| 200 | 8.69 | 43.47 | 86.28 |
| 225 | 8.85 | 44.25 | 87.82 |
| 250 | 9.14 | 45.68 | 90.65 |
| 275 | 9.31 | 46.53 | 92.33 |
| 300 | 9.57 | 47.86 | 94.98 |
| 325 | 9.95 | 49.75 | 98.73 |
| 350 | 10.29 | 51.45 | 102.10 |
| 375 | 10.52 | 52.60 | 104.39 |
| 400 | 10.63 | 53.17 | 105.51 |
| 425 | 10.91 | 54.54 | 108.23 |
| 450 | 11.34 | 56.71 | 112.54 |
| 475 | 11.64 | 58.19 | 115.47 |
| 500 | 11.98 | 59.89 | 118.85 |

| | | | |
|---|---|---|---|
| *Table (7) is a statistical table of the releasable iron concentration in the soymilk with 20 ppm ferrous sulfate and different additive dosage of ascorbic acid ions. | | | |

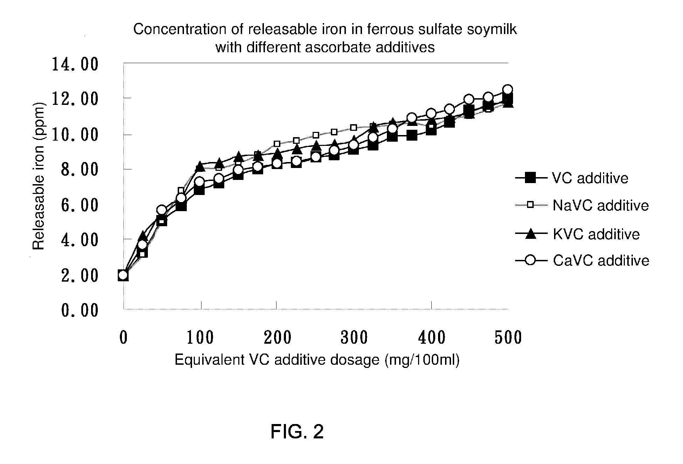

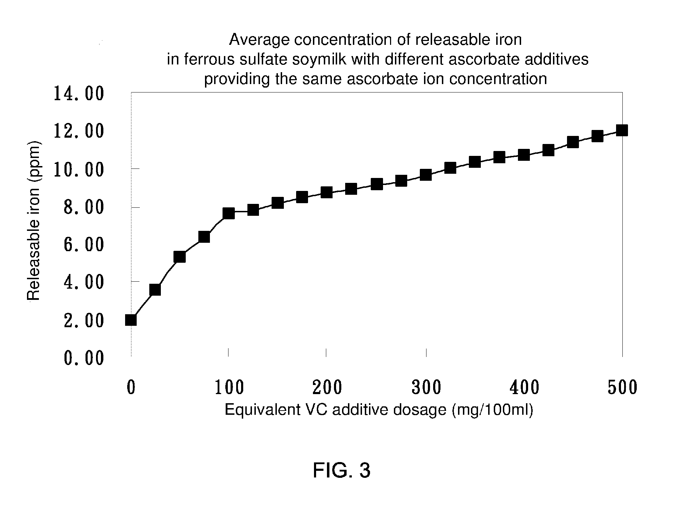

Please refer to FIG. 2, which illustrates a curve plot of the concentration of the releasable iron in a ferrous sulfate soymilk with different ascorbate additives, and please simultaneously refer to FIG. 3, which illustrates a curve plot of the average concentration of the releasable iron in the ferrous sulfate soymilk with different ascorbate additives providing the same ascorbate ion concentration. Through above Table (3), Table (4), Table (5), Table (6), Table (7), FIG.2, and FIG. 3, it can easily understand that, essentially, the releasable iron concentration for the soymilk added with the ferrous sulfate is increased with the additive dosage of the ascorbic acid or the ascorbate. Moreover, when the additive dosage of the ascorbic acid or the ascorbate reaches a certain amount, the releasable iron concentration for the soymilk added with the ferrous sulfate will not has significantly incensement. Sequentially, in a third experiment, different additive dosage of VC, NaVC, KVC, and CaVC, are respectively into the soymilk with 20 ppm ferrous bisglycinate for testing the effect of encouraging the release of iron ions, and the experiment results are listed in following Table (8), Table (9), Table (10), Table (11), and Table (12).

**Table (8)**

| additive dosage of VC (ppm) | releasable iron concentration (ppm) | iron release rate (%) | relative release rate (%) |
|---|---|---|---|
| 0 | 2.24 | 10.87 | 21.58 |
| 25 | 4.31 | 20.92 | 41.52 |
| 50 | 5.93 | 28.79 | 57.13 |
| 75 | 7.19 | 34.90 | 69.27 |
| 100 | 8.13 | 39.47 | 78.32 |
| 125 | 8.44 | 40.97 | 81.31 |
| 150 | 8.78 | 42.62 | 84.58 |
| 175 | 9.01 | 43.74 | 86.80 |
| 200 | 9.29 | 45.10 | 89.50 |
| 225 | 9.78 | 47.48 | 94.22 |
| 250 | 10.26 | 49.81 | 98.84 |
| 275 | 10.62 | 51.55 | 102.31 |
| 300 | 11.10 | 53.88 | 106.93 |
| 325 | 11.19 | 54.32 | 107.80 |
| 350 | 11.39 | 55.29 | 109.73 |
| 375 | 11.57 | 56.17 | 111.46 |
| 400 | 11.75 | 57.04 | 113.19 |
| 425 | 11.76 | 57.09 | 113.29 |
| 450 | 11.89 | 57.72 | 114.54 |
| 475 | 12.01 | 58.30 | 115.70 |
| 500 | 12.19 | 59.17 | 117.43 |

| | | | |
|---|---|---|---|
| *Table (8) is a statistical table of the releasable iron concentration in the soymilk with 20 ppm ferrous bisglycinate and VC additive. | | | |

**Table (9)**

| additive dosage of NaVC (ppm) | releasable iron concentration (ppm) | iron release rate (%) | relative release rate (%) |
|---|---|---|---|
| 0.0 | 2.24 | 11.22 | 22.26 |
| 28.6 | 4.57 | 22.85 | 45.35 |
| 57.1 | 5.81 | 29.05 | 57.65 |
| 85.7 | 7.89 | 39.45 | 78.29 |
| 114.3 | 8.88 | 44.40 | 88.11 |
| 142.9 | 9.00 | 45.00 | 89.30 |
| 171.4 | 9.14 | 45.70 | 90.69 |
| 200.0 | 9.21 | 46.05 | 91.39 |
| 228.6 | 9.45 | 47.24 | 93.74 |
| 257.1 | 10.18 | 50.90 | 101.01 |
| 285.7 | 10.44 | 52.18 | 103.56 |
| 314.3 | 10.41 | 52.05 | 103.29 |
| 342.9 | 10.51 | 52.55 | 104.29 |
| 371.4 | 10.59 | 52.95 | 105.08 |
| 400.0 | 10.67 | 53.35 | 105.87 |
| 428.6 | 10.8 | 54.00 | 107.16 |
| 457.1 | 11.04 | 55.20 | 109.55 |
| 485.7 | 11.09 | 55.45 | 110.04 |
| 514.3 | 10.89 | 54.45 | 108.06 |
| 542.9 | 11.13 | 55.65 | 110.44 |
| 571.4 | 11.20 | 56.00 | 111.13 |

| | | | |
|---|---|---|---|
| *Table (9) is a statistical table of the releasable iron concentration in the soymilk with 20 ppm ferrous bisglycinate and NaVC additive. * wherein content of ascorbic acid ions in the soymilk dissociated from the NaVC is 87.5%. | | | |

**Table (10)**

| additive dosage of KVC (ppm) | releasable iron concentration (ppm) | iron release rate (%) | relative release rate (%) |
|---|---|---|---|
| 0.0 | 2.24 | 11.22 | 22.26 |
| 30.4 | 4.21 | 21.05 | 41.77 |
| 60.8 | 5.56 | 27.81 | 55.18 |
| 91.2 | 7.39 | 36.95 | 73.33 |
| 121.6 | 8.68 | 43.40 | 86.13 |
| 152.0 | 8.99 | 44.95 | 89.20 |
| 182.4 | 9.23 | 46.15 | 91.59 |
| 212.8 | 9.45 | 47.25 | 93.77 |
| 243.2 | 9.31 | 46.55 | 92.38 |
| 273.6 | 9.52 | 47.60 | 94.46 |
| 304.0 | 9.66 | 48.30 | 95.85 |
| 334.4 | 10.03 | 50.15 | 99.52 |
| 364.8 | 10.50 | 52.50 | 104.19 |
| 395.2 | 10.67 | 53.35 | 105.87 |
| 425.6 | 10.96 | 54.80 | 108.75 |
| 456.0 | 11.10 | 55.50 | 110.14 |
| 486.4 | 11.31 | 56.55 | 112.22 |
| 516.8 | 11.38 | 56.90 | 112.92 |
| 547.2 | 11.56 | 57.80 | 114.71 |
| 577.6 | 11.69 | 58.45 | 116.00 |
| 608.0 | 11.94 | 59.70 | 118.48 |

| | | | |
|---|---|---|---|
| *Table (10) is a statistical table of the releasable iron concentration in the soymilk with 20 ppm ferrous bisglycinate and KVC additive. * wherein content of ascorbic acid ions in the soymilk dissociated from the KVC is 82.2%. | | | |

**Table (11)**

| additive dosage of CaVC (ppm) | releasable iron concentration (ppm) | iron release rate (%) | relative release rate (%) |
|---|---|---|---|
| 0.0 | 2.24 | 11.22 | 22.26 |
| 27.9 | 3.82 | 19.10 | 37.90 |
| 55.7 | 4.84 | 24.21 | 48.04 |
| 83.6 | 6.13 | 30.65 | 60.83 |
| 111.4 | 7.90 | 39.51 | 78.41 |
| 139.3 | 8.24 | 41.20 | 81.76 |
| 167.1 | 8.60 | 43.00 | 85.33 |
| 195.0 | 8.77 | 43.85 | 87.02 |
| 222.8 | 9.11 | 45.55 | 90.39 |
| 250.7 | 9.46 | 47.30 | 93.87 |
| 278.5 | 9.81 | 49.05 | 97.34 |
| 306.4 | 10.03 | 50.15 | 99.52 |
| 334.2 | 10.62 | 53.10 | 105.38 |
| 362.1 | 11.48 | 57.40 | 113.91 |
| 389.9 | 11.90 | 59.48 | 118.04 |
| 417.8 | 12.01 | 60.05 | 119.17 |
| 445.6 | 12.29 | 61.45 | 121.95 |
| 473.5 | 12.11 | 60.55 | 120.16 |
| 501.3 | 11.83 | 59.15 | 117.38 |
| 529.2 | 11.86 | 59.30 | 117.68 |
| 557.0 | 11.73 | 58.65 | 116.39 |

| | | | |
|---|---|---|---|
| *Table (11) is a statistical table of the releasable iron concentration in the soymilk with 20 ppm ferrous bisglycinate and CaVC additive. * wherein content of ascorbic acid ions in the soymilk dissociated from the CaVC is 89.8%. | | | |

**Table (12)**

| average additive dosage of ascorbic acid ions (ppm) | releasable iron concentration (ppm) | iron release rate (%) | relative release rate (%) |
|---|---|---|---|
| 0 | 2.24 | 11.21 | 22.25 |
| 25 | 4.23 | 21.14 | 41.95 |
| 50 | 5.54 | 27.68 | 54.93 |
| 75 | 7.15 | 35.75 | 70.95 |
| 100 | 8.40 | 41.99 | 83.33 |
| 125 | 8.67 | 43.34 | 86.00 |
| 150 | 8.94 | 44.69 | 88.68 |
| 175 | 9.11 | 45.55 | 90.39 |
| 200 | 9.29 | 46.45 | 92.17 |
| 225 | 9.74 | 48.68 | 96.60 |
| 250 | 10.04 | 50.21 | 99.64 |
| 275 | 10.27 | 51.36 | 101.93 |
| 300 | 10.68 | 53.41 | 106.00 |
| 325 | 10.98 | 54.91 | 108.97 |
| 350 | 11.23 | 56.15 | 111.42 |
| 375 | 11.37 | 56.85 | 112.82 |
| 400 | 11.60 | 57.99 | 115.08 |
| 425 | 11.59 | 57.93 | 114.95 |
| 450 | 11.54 | 57.71 | 114.53 |
| 475 | 11.67 | 58.36 | 115.82 |
| 500 | 11.77 | 58.83 | 116.74 |

| | | | |
|---|---|---|---|
| *Table (12) is a statistical table of the releasable iron concentration in the soymilk with 20 ppm ferrous bisglycinate and different additive dosage of ascorbic acid ions. | | | |

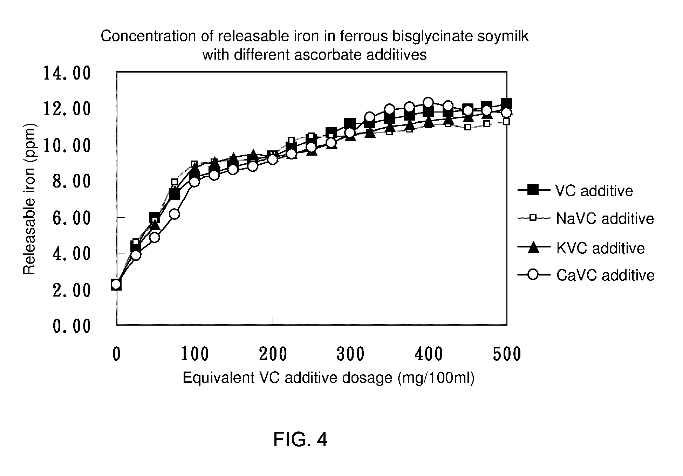

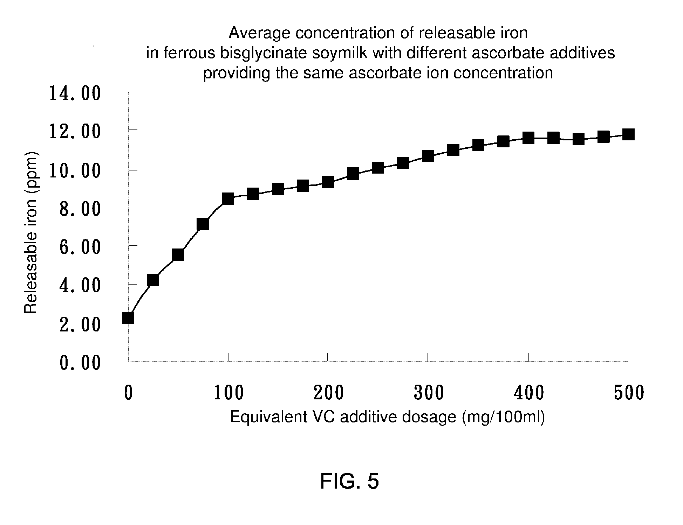

Moreover, Please refer to FIG. 4, which illustrates a curve plot of the concentration of the releasable iron in a ferrous bisglycinate soymilk with different ascorbate additives, and please simultaneously refer to FIG. 5, which illustrates a curve plot of the average concentration of the releasable iron in the ferrous bisglycinate soymilk with different ascorbate additives providing the same ascorbate ion concentration. Through above Table (8), Table (9), Table (10), Table (11), Table (12), FIG. 4, and FIG. 5, it can easily understand that the releasable iron concentration for the soymilk added with the ferrous bisglycinate is increased with the additive dosage of the ascorbic acid or the ascorbate. In addition, when the additive dosage of the ascorbic acid or the ascorbate reaches a certain amount, the releasable iron concentration for the soymilk added with the ferrous bisglycinate will not has significantly incensement.

Next, in a fourth experiment, it respectively adds different additive dosage of VC, NaVC, KVC, and CaVC into the soymilk with 50 ppm ferric pyrophosphate for testing the effect of encouraging the release of iron ions, and the experiment results are listed in following Table (13), Table (14), Table (15), Table (16), and Table (17).

**Table (13)**

| additive dosage of VC (ppm) | releasable iron concentration (ppm) | iron release rate (%) | relative release rate (%) |
|---|---|---|---|
| 0 | 1.22 | 2.44 | 4.85 |
| 25 | 2.87 | 5.74 | 11.39 |
| 50 | 4.00 | 7.99 | 15.86 |
| 75 | 5.52 | 11.04 | 21.91 |
| 100 | 6.33 | 12.66 | 25.13 |
| 125 | 7.03 | 14.06 | 27.90 |
| 150 | 7.98 | 15.96 | 31.67 |
| 175 | 8.44 | 16.88 | 33.50 |
| 200 | 9.22 | 18.44 | 36.59 |
| 225 | 10.45 | 20.90 | 41.48 |
| 250 | 11.20 | 22.40 | 44.45 |
| 275 | 11.69 | 23.38 | 46.40 |
| 300 | 12.75 | 25.50 | 50.61 |
| 325 | 13.21 | 26.42 | 52.43 |
| 350 | 13.78 | 27.56 | 54.69 |
| 375 | 14.58 | 29.16 | 57.87 |
| 400 | 14.66 | 29.32 | 58.19 |
| 425 | 14.69 | 29.38 | 58.31 |
| 450 | 15.61 | 31.22 | 61.96 |
| 475 | 15.27 | 30.54 | 60.61 |
| 500 | 15.00 | 29.99 | 59.52 |

| | | | |
|---|---|---|---|
| *Table (13) is a statistical table of the releasable iron concentration in the soymilk with 50 ppm ferric pyrophosphate and VC additive. | | | |

**Table (14)**

| additive dosage of NaVC (ppm) | releasable iron concentration (ppm) | iron release rate (%) | relative release rate (%) |
|---|---|---|---|
| 0.0 | 1.22 | 2.44 | 4.85 |
| 28.6 | 2.61 | 5.22 | 10.36 |
| 57.1 | 4.01 | 8.02 | 15.92 |
| 85.7 | 6.00 | 12.00 | 23.81 |
| 114.3 | 7.35 | 14.71 | 29.19 |
| 142.9 | 7.93 | 15.86 | 31.47 |
| 171.4 | 8.30 | 16.60 | 32.94 |
| 200.0 | 8.62 | 17.24 | 34.21 |
| 228.6 | 8.59 | 17.18 | 34.09 |
| 257.1 | 8.84 | 17.68 | 35.09 |
| 285.7 | 8.99 | 17.99 | 35.69 |
| 314.3 | 9.71 | 19.42 | 38.54 |
| 342.9 | 10.14 | 20.28 | 40.25 |
| 371.4 | 10.77 | 21.54 | 42.75 |
| 400.0 | 11.67 | 23.34 | 46.32 |
| 428.6 | 12.24 | 24.48 | 48.58 |
| 457.1 | 12.92 | 25.84 | 51.28 |
| 485.7 | 13.48 | 26.96 | 53.50 |
| 514.3 | 13.66 | 27.32 | 54.22 |
| 542.9 | 14.59 | 29.18 | 57.91 |
| 571.4 | 14.33 | 28.66 | 56.88 |

| | | | |
|---|---|---|---|
| *Table (14) is a statistical table of the releasable iron concentration in the soymilk with 50 ppm ferric pyrophosphate and NaVC additive. * wherein content of ascorbic acid ions in the soymilk dissociated from the NaVC is 87.5%. | | | |

**Table (15)**

| additive dosage of KVC (ppm) | releasable iron concentration (ppm) | iron release rate (%) | relative release rate (%) |
|---|---|---|---|
| 0.0 | 1.22 | 2.44 | 4.85 |
| 30.4 | 2.31 | 4.62 | 9.17 |
| 60.8 | 4.00 | 8.01 | 15.89 |
| 91.2 | 5.47 | 10.94 | 21.71 |
| 121.6 | 7.53 | 15.05 | 29.88 |
| 152.0 | 8.49 | 16.98 | 33.70 |
| 182.4 | 8.71 | 17.42 | 34.57 |
| 212.8 | 9.32 | 18.64 | 36.99 |
| 243.2 | 9.80 | 19.59 | 38.88 |
| 273.6 | 10.63 | 21.26 | 42.19 |
| 304.0 | 11.12 | 22.24 | 44.14 |
| 334.4 | 11.58 | 23.16 | 45.96 |
| 364.8 | 12.80 | 25.60 | 50.80 |
| 395.2 | 13.24 | 26.48 | 52.55 |
| 425.6 | 13.11 | 26.22 | 52.03 |
| 456.0 | 13.77 | 27.54 | 54.65 |
| 486.4 | 13.75 | 27.50 | 54.57 |
| 516.8 | 14.52 | 29.04 | 57.63 |
| 547.2 | 14.21 | 28.42 | 56.40 |
| 577.6 | 15.33 | 30.66 | 60.85 |
| 608.0 | 16.13 | 32.26 | 64.02 |

| | | | |
|---|---|---|---|
| *Table (15) is a statistical table of the releasable iron concentration in the soymilk with 50 ppm ferric pyrophosphate and KVC additive. * wherein content of ascorbic acid ions in the soymilk dissociated from the KVC is 82.2%. | | | |

**Table (16)**

| additive dosage of CaVC (ppm) | releasable iron concentration (ppm) | iron release rate (%) | relative release rate (%) |
|---|---|---|---|
| 0.0 | 1.22 | 2.44 | 4.85 |
| 27.9 | 2.18 | 4.36 | 8.65 |
| 55.7 | 3.61 | 7.21 | 14.32 |
| 83.6 | 5.70 | 11.40 | 22.62 |
| 111.4 | 6.70 | 13.39 | 26.58 |
| 139.3 | 7.42 | 14.84 | 29.45 |
| 167.1 | 8.45 | 16.90 | 33.54 |
| 195.0 | 8.69 | 17.38 | 34.49 |
| 222.8 | 9.11 | 18.22 | 36.16 |
| 250.7 | 9.37 | 18.74 | 37.19 |
| 278.5 | 9.58 | 19.16 | 38.02 |
| 306.4 | 10.24 | 20.48 | 40.64 |
| 334.2 | 10.76 | 21.52 | 42.71 |
| 362.1 | 11.73 | 23.46 | 46.56 |
| 389.9 | 12.39 | 24.78 | 49.18 |
| 417.8 | 12.65 | 25.30 | 50.21 |
| 445.6 | 13.11 | 26.22 | 52.03 |
| 473.5 | 13.88 | 27.76 | 55.09 |
| 501.3 | 13.72 | 27.44 | 54.46 |
| 529.2 | 14.75 | 29.50 | 58.54 |
| 557.0 | 16.75 | 33.50 | 66.49 |

| | | | |
|---|---|---|---|
| *Table (16) is a statistical table of the releasable iron concentration in the soymilk with 50 ppm ferric pyrophosphate and CaVC additive. * wherein content of ascorbic acid ions in the soymilk dissociated from the CaVC is 89.8%. | | | |

**Table (17)**

| average additive dosage of ascorbic acid ions (ppm) | releasable iron concentration (ppm) | iron release rate (%) | relative release rate (%) |
|---|---|---|---|
| 0 | 1.22 | 2.44 | 4.85 |
| 25 | 2.49 | 4.99 | 9.89 |
| 50 | 3.90 | 7.81 | 15.50 |
| 75 | 5.67 | 11.35 | 22.51 |
| 100 | 6.98 | 13.96 | 27.69 |
| 125 | 7.72 | 15.44 | 30.63 |
| 150 | 8.36 | 16.72 | 33.18 |
| 175 | 8.77 | 17.54 | 34.80 |
| 200 | 9.18 | 18.36 | 36.43 |
| 225 | 9.82 | 19.65 | 38.99 |
| 250 | 10.22 | 20.45 | 40.58 |
| 275 | 10.81 | 21.61 | 42.89 |
| 300 | 11.61 | 23.23 | 46.09 |
| 325 | 12.24 | 24.48 | 48.57 |
| 350 | 12.74 | 25.47 | 50.55 |
| 375 | 13.31 | 26.62 | 52.83 |
| 400 | 13.61 | 27.22 | 54.02 |
| 425 | 14.14 | 28.29 | 56.13 |
| 450 | 14.30 | 28.60 | 56.76 |
| 475 | 14.99 | 29.97 | 59.48 |
| 500 | 15.55 | 31.10 | 61.73 |

| | | | |
|---|---|---|---|
| *Table (17) is a statistical table of the releasable iron concentration in the soymilk with 50 ppm ferric pyrophosphate and different additive dosage of ascorbic acid ions. | | | |

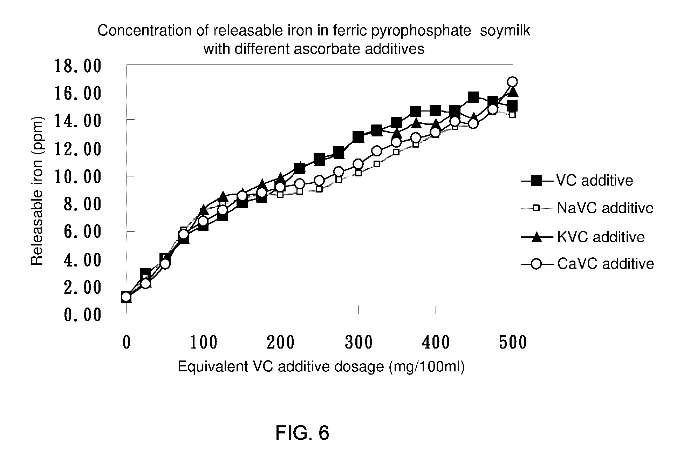

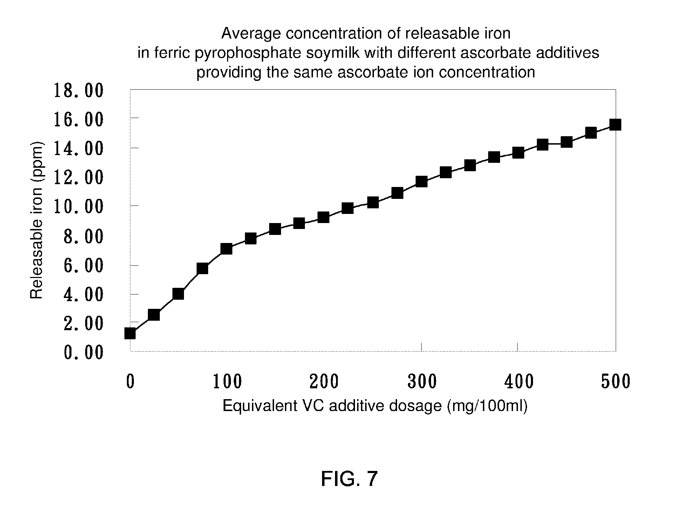

Please refer to FIG. 6, which illustrates a curve plot of the concentration of the releasable iron in a ferric pyrophosphate soymilk with different ascorbate additives, and please simultaneously refer to FIG. 7, which illustrates a curve plot of the average concentration of the releasable iron in the ferric pyrophosphate soymilk with different ascorbate additives providing the same ascorbate ion concentration. Through above Table (13), Table (14), Table (15), Table (16), Table (17), FIG. 6, and FIG. 7, it can easily understand that the releasable iron concentration for the soymilk added with the ferric pyrophosphate is increased with the additive dosage of the ascorbic acid or the ascorbate. In addition, when the additive dosage of the ascorbic acid or the ascorbate reaches a certain amount, the releasable iron concentration for the soymilk added with the ferrous bisglycinate will not has significantly incensement.

Sequentially, in a fifth experiment, it respectively adds different additive dosage of VC, NaVC, KVC, and CaVC into the soymilk with 30 ppm ferrous gluconate for testing the effect of encouraging the release of iron ions, and the experiment results are listed in following Table (83), Table (19), Table (20), Table (21), Table (22), and Table (23).

**Table (18)**

| additive dosage of VC (ppm) | releasable iron concentration (ppm) | iron release rate (%) | relative release rate (%) |
|---|---|---|---|
| 0 | 2.08 | 6.94 | 13.77 |
| 25 | 6.25 | 20.83 | 41.34 |
| 50 | 9.27 | 30.90 | 61.31 |
| 75 | 10.11 | 33.70 | 66.88 |
| 100 | 10.76 | 35.87 | 71.19 |
| 125 | 11.58 | 38.60 | 76.60 |
| 150 | 12.32 | 41.06 | 81.49 |
| 175 | 12.25 | 40.83 | 81.03 |
| 200 | 12.34 | 41.13 | 81.63 |
| 225 | 12.87 | 42.90 | 85.14 |
| 250 | 13.28 | 44.27 | 87.85 |
| 275 | 13.64 | 45.47 | 90.23 |
| 300 | 14.29 | 47.62 | 94.51 |
| 325 | 14.40 | 48.00 | 95.26 |
| 350 | 14.51 | 48.38 | 96.01 |
| 375 | 14.69 | 48.97 | 97.18 |
| 400 | 14.94 | 49.79 | 98.80 |
| 425 | 15.62 | 52.07 | 103.33 |
| 450 | 15.66 | 52.20 | 103.59 |
| 475 | 16.00 | 53.33 | 105.84 |
| 500 | 16.13 | 53.77 | 106.70 |

| | | | |
|---|---|---|---|
| *Table (18) is a statistical table of the releasable iron concentration in the soymilk with 30 ppm ferrous gluconate and VC additive. | | | |

**Table (19)**

| additive dosage of NaVC (ppm) | releasable iron concentration (ppm) | iron release rate (%) | relative release rate (%) |
|---|---|---|---|
| 0.0 | 2.08 | 6.94 | 13.77 |
| 28.6 | 7.71 | 25.70 | 51.00 |
| 57.1 | 9.13 | 30.42 | 60.38 |
| 85.7 | 9.89 | 32.97 | 65.42 |
| 114.3 | 10.35 | 34.50 | 68.47 |
| 142.9 | 10.74 | 35.80 | 71.05 |
| 171.4 | 11.50 | 38.32 | 76.05 |
| 200.0 | 11.62 | 38.73 | 76.87 |
| 228.6 | 12.24 | 40.81 | 80.98 |
| 257.1 | 12.65 | 42.17 | 83.68 |
| 285.7 | 12.63 | 42.10 | 83.55 |
| 314.3 | 12.88 | 42.93 | 85.20 |
| 342.9 | 13.16 | 43.87 | 87.05 |
| 371.4 | 13.40 | 44.67 | 88.64 |
| 400.0 | 13.25 | 44.17 | 87.65 |
| 428.6 | 13.52 | 45.07 | 89.44 |
| 457.1 | 13.86 | 46.22 | 91.72 |
| 485.7 | 14.38 | 47.93 | 95.12 |
| 514.3 | 14.51 | 48.37 | 95.98 |
| 542.9 | 14.89 | 49.63 | 98.50 |
| 571.4 | 15.66 | 52.20 | 103.59 |

| | | | |
|---|---|---|---|
| *Table (19) is a statistical table of the releasable iron concentration in the soymilk with 30 ppm ferrous gluconate and NaVC additive. * wherein content of ascorbic acid ions in the soymilk dissociated from the NaVC is 87.5%. | | | |

**Table (20)**

| additive dosage of KVC (ppm) | releasable iron concentration (ppm) | iron release rate (%) | relative release rate (%) |
|---|---|---|---|
| 0.0 | 2.08 | 6.94 | 13.77 |
| 30.4 | 8.01 | 26.70 | 52.99 |
| 60.8 | 10.12 | 33.73 | 66.93 |
| 91.2 | 10.82 | 36.07 | 71.58 |
| 121.6 | 11.61 | 38.70 | 76.81 |
| 152.0 | 11.66 | 38.87 | 77.13 |
| 182.4 | 11.80 | 39.33 | 78.06 |
| 212.8 | 12.38 | 41.27 | 81.89 |
| 243.2 | 12.77 | 42.57 | 84.47 |
| 273.6 | 12.75 | 42.50 | 84.34 |
| 304.0 | 12.96 | 43.18 | 85.70 |
| 334.4 | 13.20 | 44.00 | 87.32 |
| 364.8 | 13.41 | 44.70 | 88.71 |
| 395.2 | 13.92 | 46.40 | 92.08 |
| 425.6 | 14.15 | 47.17 | 93.60 |
| 456.0 | 14.38 | 47.93 | 95.12 |
| 486.4 | 14.22 | 47.40 | 94.07 |
| 516.8 | 14.65 | 48.83 | 96.91 |
| 547.2 | 14.76 | 49.21 | 97.65 |
| 577.6 | 15.20 | 50.67 | 100.55 |
| 608.0 | 15.32 | 51.07 | 101.34 |

| | | | |
|---|---|---|---|
| *Table (20) is a statistical table of the releasable iron concentration in the soymilk with 30 ppm ferrous gluconate and KVC additive. * wherein content of ascorbic acid ions in the soymilk dissociated from the KVC is 82.2%. | | | |

**Table (21)**

| additive dosage of CaVC (ppm) | releasable iron concentration (ppm) | iron release rate (%) | relative release rate (%) |
|---|---|---|---|
| 0.0 | 2.08 | 6.94 | 13.81 |
| 27.9 | 7.35 | 24.50 | 48.76 |
| 55.7 | 9.62 | 32.08 | 63.83 |
| 83.6 | 9.88 | 32.93 | 65.54 |
| 111.4 | 10.39 | 34.63 | 68.92 |
| 139.3 | 10.70 | 35.67 | 70.98 |
| 167.1 | 11.01 | 36.70 | 73.03 |
| 195.0 | 11.32 | 37.73 | 75.09 |
| 222.8 | 11.26 | 37.52 | 74.66 |
| 250.7 | 11.84 | 39.47 | 78.54 |
| 278.5 | 12.39 | 41.30 | 82.19 |
| 306.4 | 13.42 | 44.73 | 89.02 |
| 334.2 | 14.61 | 48.71 | 96.94 |
| 362.1 | 14.68 | 48.93 | 97.38 |
| 389.9 | 14.80 | 49.33 | 98.18 |
| 417.8 | 15.06 | 50.20 | 99.90 |
| 445.6 | 15.11 | 50.36 | 100.22 |
| 473.5 | 15.15 | 50.50 | 100.50 |
| 501.3 | 15.21 | 50.70 | 100.90 |
| 529.2 | 15.30 | 51.00 | 101.49 |
| 557.0 | 15.19 | 50.63 | 100.76 |

| | | | |
|---|---|---|---|
| *Table (21) is a statistical table of the releasable iron concentration in the soymilk with 30 ppm ferrous gluconate and CaVC additive. * wherein content of ascorbic acid ions in the soymilk dissociated from the CaVC is 89.8%. | | | |

**Table (22)**

| average additive dosage of ascorbic acid ions (ppm) | releasable iron concentration (ppm) | iron release rate (%) | relative release rate (%) |
|---|---|---|---|
| 0 | 2.08 | 6.94 | 13.77 |
| 25 | 7.33 | 24.43 | 48.49 |
| 50 | 9.53 | 31.78 | 63.07 |
| 75 | 10.18 | 33.92 | 67.31 |
| 100 | 10.78 | 35.93 | 71.30 |
| 125 | 11.17 | 37.23 | 73.89 |
| 150 | 11.66 | 38.85 | 77.11 |
| 175 | 11.89 | 39.64 | 78.67 |
| 200 | 12.15 | 40.51 | 80.39 |
| 225 | 12.53 | 41.76 | 82.87 |
| 250 | 12.81 | 42.71 | 84.77 |
| 275 | 13.29 | 44.28 | 87.88 |
| 300 | 13.87 | 46.23 | 91.73 |
| 325 | 14.10 | 47.00 | 93.27 |
| 350 | 14.18 | 47.26 | 93.79 |
| 375 | 14.41 | 48.04 | 95.34 |
| 400 | 14.53 | 48.44 | 96.13 |
| 425 | 14.95 | 49.83 | 98.90 |
| 450 | 15.04 | 50.12 | 99.46 |
| 475 | 15.35 | 51.16 | 101.52 |
| 500 | 15.58 | 51.92 | 103.03 |

| | | | |
|---|---|---|---|
| *Table (22) is a statistical table of the releasable iron concentration in the soymilk with 30 ppm ferrous gluconate and different additive dosage of ascorbic acid ions. | | | |

**Table (23)**

| average additive dosage of ascorbic acid ions (ppm) | average iron release rate (%) | average relative release rate (%) |
|---|---|---|
| 0 | 7.45 | 14.78 |
| 25 | 16.90 | 33.55 |
| 50 | 23.17 | 45.97 |
| 75 | 27.88 | 55.33 |
| 100 | 32.08 | 63.67 |
| 125 | 33.35 | 66.18 |
| 150 | 34.92 | 69.30 |
| 175 | 35.85 | 71.14 |
| 200 | 36.86 | 73.15 |
| 225 | 38.23 | 75.86 |
| 250 | 39.40 | 78.18 |
| 275 | 40.57 | 80.51 |
| 300 | 42.29 | 83.93 |
| 325 | 43.63 | 86.59 |
| 350 | 44.67 | 88.66 |
| 375 | 45.61 | 90.52 |
| 400 | 46.28 | 91.85 |
| 425 | 47.22 | 93.72 |
| 450 | 47.86 | 94.99 |
| 475 | 48.99 | 97.23 |
| 500 | 50.01 | 99.24 |

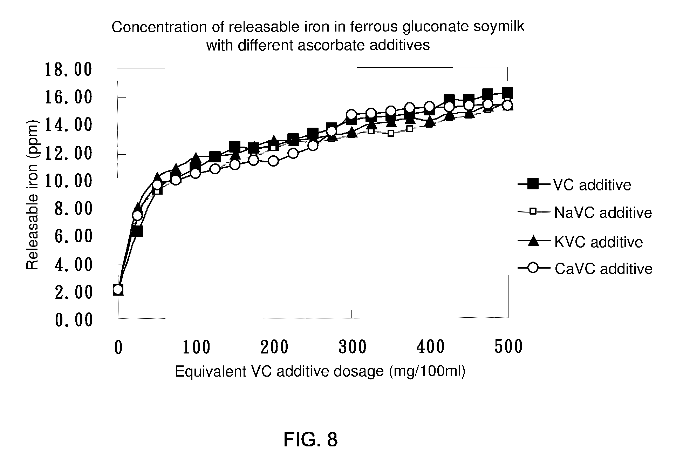

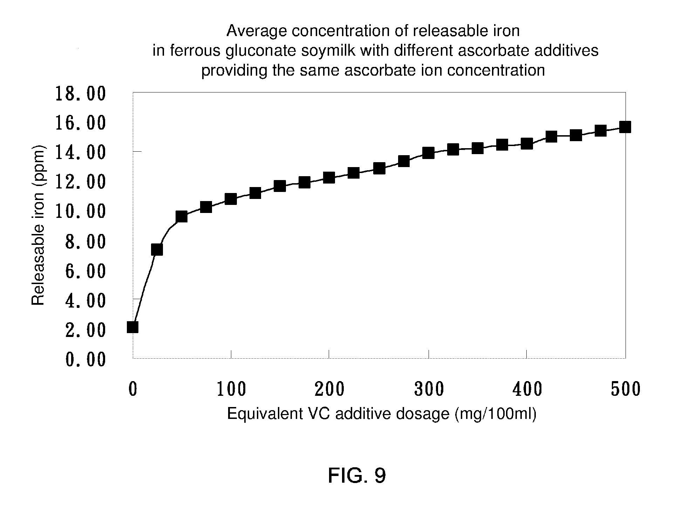

Please refer to FIG. 8, which illustrates a curve plot of the concentration of the releasable iron in a ferrous gluconate soymilk with different ascorbate additives, and please simultaneously refer to FIG. 9, which illustrates a curve plot of the average concentration of the releasable iron in the ferrous gluconate soymilk with different ascorbate additives providing the same ascorbate ion concentration. Through above Table (18), Table (19), Table (20), Table (21), Table (22), Table (23), FIG. 8, and FIG. 9, it can understand that the releasable iron concentration for the soymilk added with the ferrous gluconate is increased with the additive dosage of the ascorbic acid or the ascorbate. In addition, when the additive dosage of the ascorbic acid or the ascorbate reaches a certain amount, the releasable iron concentration for the soymilk added with the ferrous gluconate will not has significantly incensement.

So that, according the above experiment results, it is able to know the releasable iron concentration in the soymilk with different iron dosages. In addition, in following Table (24), it lists the most effective additive dosage of the ascorbic acid and the ascorbates for being added into the soymilk with different iron dosages.

**Table (24)**

| | ferrous sulfate | ferrous bisglycinate | ferric pyrophos phate | ferrous gluconate |
|---|---|---|---|---|
| additive dosage of iron (ppm) | 20 | 20 | 50 | 30 |
| the most effective additive dosage for ascorbic acid iron (mg/100 ml) | 100 | 200 | 100 | 50 |
| releasable iron concentration before adding the ascorbic acid iron (ppm) | 1.90 | 2.24 | 1.22 | 2.08 |
| releasable iron concentration after adding the ascorbic acid iron (ppm) | 7.54 | 9.63 | 6.98 | 9.53 |
| release promoting rate of iron (%) | 389 | 430 | 561 | 458 |

| | | | | |
|---|---|---|---|---|
| *Table (24) is a statistical table of the most effective additive dosage for the ascorbic acid and the ascorbates added into the soymilk with different iron dosages. * wherein the iron release promoting rate = (releasable iron concentration after adding the ascorbic acid iron)/( releasable iron concentration before adding the ascorbic acid iron). | | | | |

So that, through above experiment results, it can easily know that the vitamin C and the salts therefore indeed increase the iron release rate in human body; Moreover, the beast vitamin C additive dosage is 25∼50 mg/ml when using the ferrous gluconate as a standard.

However, everyone knows that vitamin C includes a stereoisomer called isoascorbic acid, and the physical and chemical properties of the isoascorbic acid are similar to the vitamin C. Although the isoascorbic acid cannot be utilized by the body enzyme, the experiment results also prove that the isoascorbic acid can also encourage the release of iron in the soymilk. Wherein the experiment results are abstained from a sixth experiment in the present invention, that is, to add sodium isoascorbate into a soymilk with 30 ppm ferrous gluconate for testing the releasable iron concentration, and the experiment results are listed in following Table (25).

**Table (25)**

| additive dosage of the sodium isoascorbate (mg/100mL) | releasable iron concentration (ppm) | iron release rate (%) | relative release rate (%) |
|---|---|---|---|
| 0.0 | 2.08 | 6.93 | 13.76 |
| 28.6 | 7.01 | 23.37 | 46.37 |
| 57.1 | 8.46 | 28.20 | 55.96 |
| 85.7 | 10.10 | 33.67 | 66.81 |
| 114.3 | 10.27 | 34.23 | 67.94 |
| 142.9 | 10.85 | 36.17 | 71.77 |
| 171.4 | 11.62 | 38.73 | 76.87 |
| 200.0 | 12.46 | 41.53 | 82.42 |
| 228.6 | 12.57 | 41.90 | 83.15 |
| 257.1 | 12.96 | 43.20 | 85.73 |
| 285.7 | 13.74 | 45.80 | 90.89 |
| 314.3 | 13.89 | 46.30 | 91.88 |
| 342.9 | 14.33 | 47.77 | 94.79 |
| 371.4 | 14.58 | 48.60 | 96.45 |
| 400.0 | 14.62 | 48.73 | 96.71 |
| 428.6 | 14.79 | 49.30 | 97.84 |
| 457.1 | 14.77 | 49.23 | 97.70 |
| 485.7 | 14.88 | 49.60 | 98.43 |
| 514.3 | 14.97 | 49.90 | 99.03 |
| 542.9 | 15.27 | 50.90 | 101.01 |
| 571.4 | 15.11 | 50.37 | 99.95 |

| | | | |
|---|---|---|---|
| *Table (25) is a statistical table of the releasable iron concentration in the soymilk with 30 ppm ferrous gluconate and the sodium isoascorbate additive. | | | |

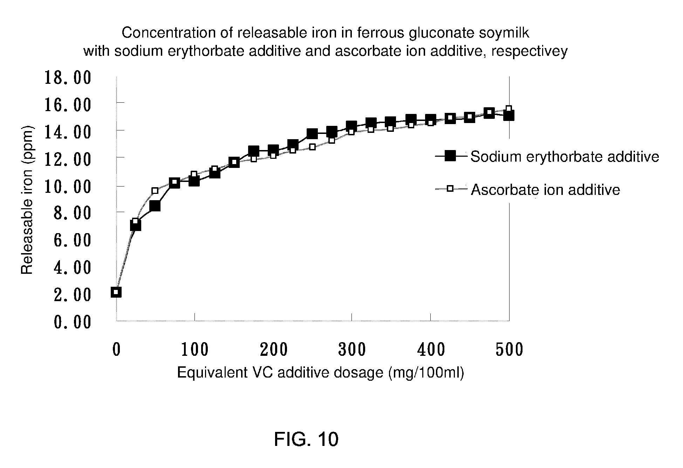

Moreover, please refer to FIG. 10, which illustrates a curve plot of the concentration of the releasable iron in the ferrous gluconate soymilk with the sodium isoascorbate additive. As shown in FIG. 10 and Table (25), it can know that the release promoting rate for iron of isoascorbic acid ions is almost the same to the release promoting rate for iron of ascorbic acid ions. So that it can also understand that the isoascorbates may encourage the release of iron in the soymilk.

Furthermore, it must especially introduce that, for a variety of soymilks are sold in markets, for example, brown rice soymilk, milk soymilk, oats soymilk, coffee milk, and black tea milk, it can further add brown rice, milk, oats, coffee, or black tea into the soymilk with additive of ascorbic acid, vitamin C salts, or vitamin C stereroisomer of proposed by the present invention; Therefore, when people drink the soymilk with additive of ascorbic acid, vitamin C salts, or vitamin C stereroisomer, people can not only improved the iron absorptivity in small intestines but also get different textures from the soymilk. Actually, the soymilk with additive of ascorbic acid, vitamin C salts, or vitamin C stereroisomer may be manufactured to a formulated soymilk powder for the soymilk manufacturer when it is mass produced. Wherein the contents in the formulated soymilk powder are listed in following Table (26)

**Table (26)**

| | additive dosage (g/ml) | percentage (%) | composition (%) |
|---|---|---|---|
| NaVC | 0.762 | 0.0762 | 76.2 |
| lactic acid bacteria | 0.001 | 0.0001 | 0.1 |
| saccharomycete | 0.1 | 0.01 | 10 |
| maltodextrin | 0.137 | 0.0137 | 13.7 |
| Total | 1 | 0.1 | 100 |

As shown in Table (26), the formulated soymilk powder consists of NaVC (sodium vitamin C), lactic acid bacteria, saccharomycete, and maltodextrin, in which the lactic acid bacteria is NTU 101 lactic acid bacteria powder, the saccharomycete is yeast powder with vitamin B complex. Moreover, it must note that, when manufacturing the formulated soymilk powder, it must pre-add 25% NaVC in the formulated soymilk powder because there has 25% NaVC consumption when processing ultra-heat treat of the formulated soymilk powder.

Therefore, the above descriptions have been clearly and completely introduced the of the soymilk with additive of vitamin C, vitamin C salts, or vitamin C stereroisomer according to the present invention, moreover, the efficiencies of the soymilk with additive of vitamin C, vitamin C salts, or vitamin C stereroisomer are proved by multi experiment results; In summary, the present invention has the following advantages:
1. Because the soymilk with additive of ascorbic acid, vitamin C salts, or vitamin C stereroisomer may increase the iron bioavailability, it can be used for replacing the traditional soymilk, so that, the soymilk long-term drinkers can not only eliminate the misgivings of suffering from the iron deficiency anemia but also keep the habit of drinking soymilk.
2. Moreover, it can further add brown rice, milk, oats, coffee, or black tea into the soymilk with additive of ascorbic acid, vitamin C salts, or vitamin C stereroisomer as proposed by the present invention; Therefore, when people drink the soymilk with additive of vitamin C, vitamin C salts, or vitamin C stereroisomer, people can not only improve the iron absorptivity in small intestines but also get different textures from the soymilk.
3. For the soymilk with additive of ascorbic acid, vitamin C salts, or vitamin C stereroisomer, which is not limited to be made by way of adding the vitamin C, the vitamin C salts, or the vitamin C stereroisomer into the soymilk, the soymilk with additive of vitamin C, vitamin C salts, or vitamin C stereroisomer may be manufactured to be a formulated soymilk powder for the soymilk manufacturer when it is mass produced.

## Claims

1. A soymilk comprising a drink made by using soybean or black bean as raw material, and an ascorbic acid, vitamin C salts or vitamin C stereoisomers, wherein the concentration of the ascorbate ion provided by the additive is ranged from 25 mg/100ml to 50 mg/100 ml.

2. The soymilk according to claim 1 further comprising an additive selected from the group consisting of brown rice, milk, oats, coffee, black tea and egg.

## Patentansprüche

1. Sojamilch umfassend ein Getränk, das durch Verwendung von Sojabohnen oder schwarzen Bohnen als Rohmaterial und Ascorbinsäure, Vitamin C-Salzen oder Vitamin C-Stereoisomeren hergestellt wird, wobei die Konzentration des durch das Zusatzmittel bereitgestellten Ascorbations im Bereich von 25 mg/100 ml bis 50 mg/100 ml liegt.

2. Sojamilch nach Anspruch 1, umfassend ein Zusatzmittel ausgewählt aus der Gruppe bestehend aus Naturreis, Milch, Hafer, Kaffee, Schwarztee und Ei.

## Revendications

1. Lait de soja comprenant une boisson préparée en utilisant du soja ou des haricots noirs comme matière première, et un acide ascorbique, des sels de la vitamine C ou des stéréoisomères de la vitamine C, la concentration en ion ascorbate fournie par l'additif étant comprise dans la plage allant de 25 mg/100 ml à 50 mg/100 ml.

2. Lait de soja selon la revendication 1, comprenant en outre un additif sélectionné dans le groupe constitué par le riz brun, le lait, l'avoine, le café, le thé noir et les oeufs.
